# EUROPEAN PATENT APPLICATION

(11) **EP 3 181 923 A1**
(43) Date of publication of application: **21.06.2017**
(21) Application number: 15201201.9
(22) Date of filing: 18.12.2015
(51) Int. Cl.: F16C 1/08, F16C 1/10, F16C 1/26

(54) **BOWDEN CABLE AND METHOD FOR MANUFACTURING OF A BOWDEN CABLE**

(71) Applicant: FICO CABLES LDA, 4470-263 Vermoim-Maia (PT)
(72) Inventor: Lopes, Pedro, 4470-263 Vermoim-Maia (PT); Carneiro, Marco, 4470-263 Vermoim-Maia (PT)
(74) Representative: Hess, Peter K. G.

(57) **Abstract**

The present invention relates to a Bowden cable comprising an inner cable, a conduit, a conduit receptacle part for receiving the conduit, and separate from the conduit receptacle part, a mounting part for mounting the conduit via the conduit receptacle part, wherein the conduit receptacle part is mechanically attached to the mounting part. Further, a method for manufacturing a Bowden cable is claimed.

## Description

### 1. Field of the invention

The present invention relates to a Bowden cable and a method for manufacturing a Bowden cable.

### 2. Technical background

In vehicles Bowden cables are used to mechanically control actuators, e.g. in a door locking mechanism, in a flexible manner. Thereby, large mechanical forces can be transmitted via the Bowden cable.

For mechanically securing the Bowden cable the conduit thereof is connected to a conduit end fitting that receives an end of the conduit and receives the pushing forces of the conduit. For a secure operation also the conduit end fitting has to apply some pulling forces to the conduit in order to avoid a separation of conduit and conduit end fitting. In normal operation such pulling forces are approximately 150N. In applications in which an anti-theft functionality is required, for example for the actuation of a door locking mechanism in a vehicle door, a separation of conduit and conduit end fitting has to be prevented in any event, to avoid any undesired manipulation of the door locking mechanism. In anti-theft applications the separation force between conduit and conduit end fitting must be higher than 500N.

Furthermore, in case water-tightness is required, a water intrusion into the conduit's interior must be prevented. This is particularly relevant in vehicle applications where one end of the Bowden cable is arranged outside the car body.

Conduit end fittings are connected to the conduit in different ways. One possible connecting process is ultrasound welding. Thereby, the conduit end fitting is welded to the conduit by ultrasound waves, after inserting the conduit to the conduit end fitting. However, this process is limited to particular suitable materials, i.e. thermoplastic materials, and provides only a low pulling resistance that can hardly provide the required resistance forces for anti-theft functionality.

Another connecting method is crimping the conduit end fitting to the conduit. This mechanical method is shown for example in document DE 10 2008 034 745. In document DE 103 41 037 a conduit is inserted in a conduit end fitting that holds the conduit such that it is hardly rotatable and almost not longitudinally displaceable. However, such conduit end fittings would neither provide the required resistance for anti-theft functionality nor provide an adequate sealing for water-tight applications.

Overmolding of the conduit end fitting to the conduit is for example disclosed in document EP 0 754 870 B1. In this document a connector is overmolded about an end of a conduit and simultaneously over a sealing and attachment means. Thus a moisture impervious conduit end fitting is provided.

However, overmolding complex parts over a conduit is elaborate and costly, due to the complexity of the injection molding tool. Furthermore, every vehicle may have vehicle specific attachment means which require a vehicle specific conduit end fitting. Thus the investment in tooling to perform the overmolding of the conduit end fitting has to be done for every specific vehicle or attachment design.

It is the problem of the present invention to provide a Bowden cable and a method for the manufacturing of a Bowden cable that complies with the above mentioned requirements and constraints.

### 3. Summary of the invention

The problem is solved by a Bowden cable according to claim 1. Particularly, this problem is solved by a Bowden cable comprising an inner cable, a conduit, a conduit receptacle part for receiving the conduit, and, separate from the conduit receptacle part, a mounting part for mounting the conduit via the conduit receptacle part, wherein the conduit receptacle part is mechanically attached to the mounting part.

Thus the present invention provides for a separation of the functions a) attaching the conduit to the conduit receptacle part and b) the mounting of the Bowden cable by the mounting part. This allows designing the conduit receptacle part as a standard element whereas the mounting part can be individualized to the respective mounting situation. This decreases the overall tooling costs for the Bowden cable as the parts to be overmolded over the conduit can be easy in design. The more complex mounting part can be injection molded separately from the overmolding. By mechanically attaching the conduit receptacle part to the mounting part an overall conduit end fitting is achieved that can on the one hand easily and cost-efficiently be manufactured and on the other hand can be individualized to the specific vehicle or mounting position. Further, the connection of the conduit to the conduit receptacle part can be optimized in order to increase the separation forces over the anti-theft level of 500N and to improve the water resistance of the Bowden cable.

Preferably, the conduit receptacle part is overmolded to the conduit. This enables a securely water-tight and strong connection between the conduit receptacle part and the conduit. The overmolded conduit receptacle part provides a connection to the conduit that exceeds the anti-theft resistance force of 500N against separation.

Preferably, the mounting part is mechanically attached to the conduit receptacle part by latching. This enables a facile, manual and fast connection of the mounting part to the conduit receptacle part. Preferably, the mechanical connection of the mounting part to the conduit receptacle part may be separable if required. Preferably the mechanical connection of the mounting part to the conduit receptacle part may be such that both elements remain moveable with respect to each other in some degree of freedom.

Preferably, the conduit receptacle part is rotatable with respect to the mounting part. This prevents an unwanted torsion and respective torsion forces acting on the Bowden cable, particularly on the conduit, that may arise in different mounting processes and that might change the functional dimension, particularly the free cable length. Such a change would usually affect the final function of the Bowden cable. A rotatable connection of the conduit receptacle part and the mounting part enables an easy and manual or automatic readjustment in the final assembly stage.

Preferably, on the other hand, a non-rotatable, rigid connection between the conduit receptacle part and the mounting part may be desired, preferably at least at one end of the Bowden cable. This may provide a more reliable connection at this end of the Bowden cable.

Preferably, for different applications a conduit receptacle part of the same shape can be mechanically attached to mounting parts of different shapes. Thereby, a standardized mold for overmolding the conduit receptacle part can be used, and large numbers of the same Bowden cable conduits with overmolded conduit receptacle parts are produced with the same tooling, which results in a significant cost-reduction. The attachment of mounting parts of different shapes to the conduit receptacle part increases the flexibility by enabling a facile mounting of the Bowden cable to different mounting positions, mounting parts, mounting brackets, devices or surfaces. Such mounting parts can be individually designed and produced separate from the overmolding which decreases the overall costs.

Preferably, the conduit receptacle part comprises at least one circumferential notch, and the mounting part comprises at least one protrusion, wherein the protrusion protrudes into the notch, for securing the attachment of the conduit receptacle part with the mounting part. Thus, the attachment of the conduit receptacle part to the mounting part or vice versa is facile and can be performed manually by a simple latching step. On the other hand such a latched connection can withstand high separation forces.

Preferably, the mounting part and the conduit receptacle part are designed such that the mounting part can be manually attached to the conduit receptacle part by thrusting the mounting part over the conduit receptacle part. Thereby, no assembly tools are necessary which facilitates the assembly.

Preferably, the conduit receptacle part comprises an outer circumferential surface and/or the mounting part comprises an inner circumferential surface, for enabling a rotational movement of the conduit receptacle part with respect to the mounting part. Thus, the connection of the receptacle part together with the conduit is rotatable with respect to the mounting part or the vehicle, which allows a torsion free mounting of the Bowden cable.

Preferably, in case the rotational movement is undesired, at least a section of the circumferential surface of the conduit receptacle part and a corresponding section of the circumferential surface of the mounting part are non-circular, so that a rotation of the conduit receptacle part with respect to the mounting part is prevented. Preferably a section of the circumferential surfaces can be flat, provide a recess or provide a protrusion to prevent rotation.

Preferably, the mounting part comprises a front plate and an end plate which are spaced from each other and are parallel to each other in order to define a receptacle in-between for mounting to a bracket. By means of the two end plates a secure connection of the Bowden cable conduit to an essentially flat mounting bracket at the vehicle is facilitated.

Preferably, the front plate and/or the end plate comprises elastic clipping means for securing the mounting part at a bracket. By clipping means the mounting part can be mounted easily, fast, securely and manually to the bracket without the need of any tool.

Preferably, the Bowden cable further comprises a sealing cap that is either a separate part and attached to the conduit receptacle part or a part overmolded to the conduit receptacle part. The sealing cap is preferably made of a rubber or a rubber-like material that allows a movement of the inner cable of the Bowden cable, but prevents dust and water intrusion into the inside of the conduit from a free end. The sealing of the conduit to the conduit receptacle part is obtained by the overmolding step that joins these two parts together.

The above mentioned problem is also solved by a method according to claim 12. Particularly, the method for manufacturing a Bowden cable, comprising an inner cable and a conduit, comprises the steps of inserting one end of the conduit into an injection tool with a mold, overmolding a conduit receptacle part to the end of the conduit, providing a mounting part that is separate from the conduit receptacle part, and mechanically attaching the mounting part to the conduit receptacle part. Thereby, the step of overmolding can be performed in a standardized manner to overmold a standardized conduit receptacle part to the conduit. This saves production costs. On the other hand vehicle individual mounting parts can be mechanically attached to such standardized conduit receptacle parts in order to provide a vehicle individual conduit end fitting of the Bowden cable.

Preferably, the overmolding step comprises an overmolding of both conduit ends at the same time. Such a parallel overmolding reduces production time and production costs for the conduit.

Preferably, the step of mechanically attaching the mounting part to the conduit receptacle part is done manually without the need of a tool, preferably by clipping the two parts together. This easy and fast connecting process facilitates the manufacturing process and requires no specific tools.

Preferably, the method further comprises a step of overmolding a sealing cap to the conduit receptacle part. The sealing cap prevents dust and water intrusion into the interior of the conduit from the free end. By overmolding the sealing cap a water tight connection of the sealing cap to the conduit receptacle part is provided. Furthermore, the production costs are reduced since no assembly of the sealing cap to the conduit receptacle part is required.

Preferably, the overmolding step of the sealing cap is done within a bi-injection tool for producing the sealing cap and the conduit receptacle part in the same tool. This significantly reduces production times. Furthermore, lesser machines occupy time and less space in the production hall are required, which saves production costs.

### 4. Brief description of the drawings

In the following, preferred embodiments of the invention are disclosed by reference to the accompanying figures, in which shows:
- Fig. 1: a side-view of a preferred embodiment of a Bowden cable, comprising a conduit end fitting;
- Fig. 2: a three-dimensional view of a preferred embodiment of the conduit fitting;
- Fig. 3: a cross-sectional side view of the preferred embodiment of the conduit end fitting of Fig. 2;
- Fig. 4: a three-dimensional view of another preferred embodiment of the conduit end fitting;
- Fig. 5: a three-dimensional view of another preferred embodiment of the mounting part of the conduit end fitting; and
- Fig. 6: a three-dimensional view of another preferred embodiment of the conduit receptacle part of the conduit end fitting.

### 5. Detailed description of embodiments of the invention

In the following, preferred embodiments of the invention are described in detail with respect to the figures.

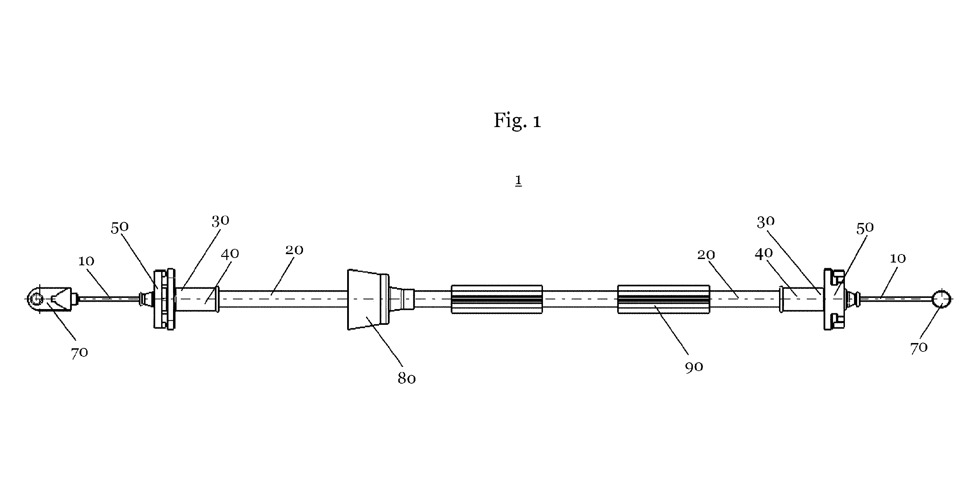

Fig. 1 shows a Bowden cable 1 comprising an inner cable 10 and a conduit 20. At each end of the conduit 20 a conduit end fitting 30 is provided for mounting the conduit to a vehicle or the like. Both conduit end fittings 30 comprise a conduit receptacle part 40 for receiving and fixing the conduit 20 and a mounting part 50 for the mounting function. The conduit receptacle part 40 and the mounting part 50 are separate parts that are mechanically connected to each other during assembly of the Bowden cable 1.

The inner cable 10 further comprises cable end fittings 70 at each end. The cable end fittings 70 are connected to moveable actuators (not shown) that are controlled by moving the inner cable 10 back and forth. The cable end fittings 70 may be overmolded to the ends of the inner cable 10 in order to transmit the required actuation forces.

The Bowden cable may further comprise a grommet 80 of an elastic material which may act as a sealing of the Bowden cable and a hole in a car body. As shown in Fig. 1 the Bowden cable may further comprise an anti-rattle tube protector 90 surrounding parts of the conduit 20 for reducing noise due to vibrations of a vehicle.

As common for Bowden cables the inner cable 10 is longitudinally displaceable in the conduit 20 and transmits forces in connection with the conduit 20 from one end of the Bowden cable to the other end.

The conduit ends 22 are enclosed, preferably overmolded, in a conduit receptacle part 40. Each conduit receptacle part 40 is then mechanically connected to a respective mounting part 50. By means of the mounting part 50 the conduit 20 can be mounted to a respective bracket (not shown) or mounting element of a vehicle.

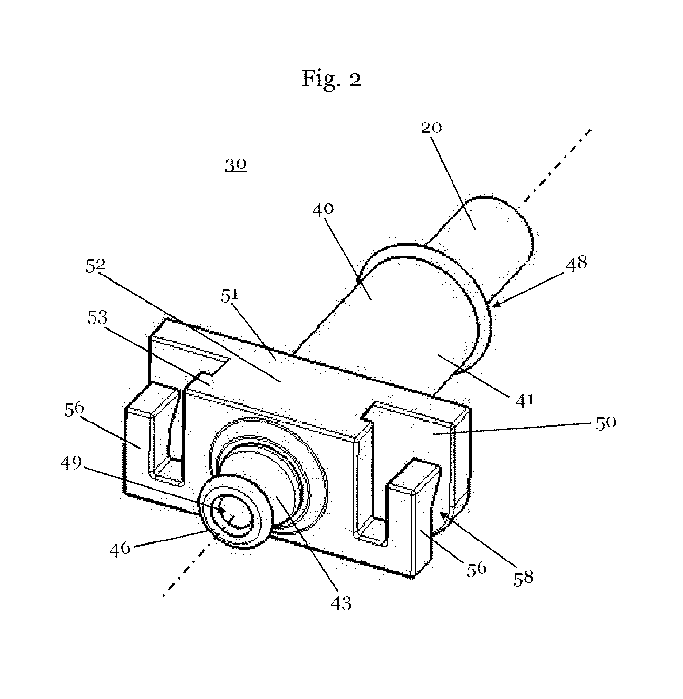

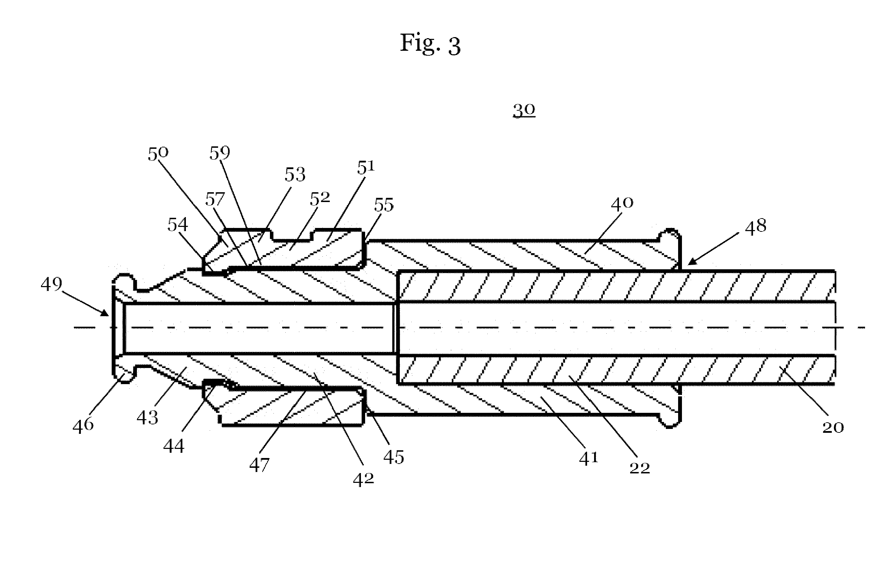

Fig. 2 and Fig. 3 show a detailed view of a conduit end fitting 30, wherein Fig. 2 is a perspective three-dimensional view, and Fig. 3 is a cross-sectional side view. An end of the conduit 20 is enclosed in the conduit receptacle part 40, more precisely in the receiving section 41 of the conduit receptacle part 40, and is connected to the conduit receptacle part 40 by overmolding.

The conduit receptacle part 40 further comprises a connecting section 42 for connecting with the mounting part 50 and an end section 43 with an inner cable opening 49 and a protrusion 46. The connecting section 42 comprises a circumferential notch 44, an outer circumferential surface 47 and a stop face 45 for supporting and securing the mounting part 50.

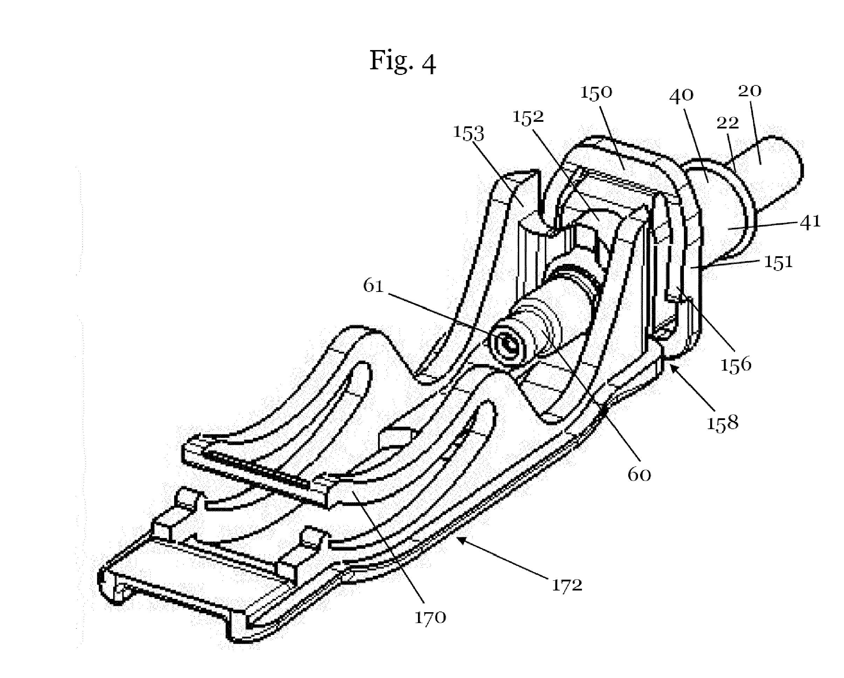

An optional sealing cap 60 (see Fig. 4) can be attached across the protrusion 46, whereby the protrusion 46 secures a water-tight attachment of the sealing cap 60 to the conduit receptacle part 40.

The mounting part 50 comprises and a front plate 51, an end plate 53 and an intermediate part 52 in-between. The intermediate part 52 is smaller in section than the front and end plate 51,53 and forms a receptacle 58 between these two plates. The receptacle 58 can receive a bracket (not shown) e.g. of a vehicle during mounting of the conduit 20 to the vehicle. The front plate 51, the end plate 53 or both comprise clipping means 56 with elastic hooks for securing the conduit end fitting 30 to mounting holes in the bracket (not shown).

Furthermore, the mounting part 50 comprises a connection opening 59 for receiving the conduit receptacle part 40 and a protrusion 54 that protrudes into the notch 44 when the conduit receptacle part 40 and the mounting part 50 are connected with each other. Corresponding to the conduit receptacle part 40 the connection opening 59 of the mounting part 50 comprises an inner circumferential surface 57 and a stop face 55. The stop faces 45, 55, the circumferential surfaces 47, 57 and the notch 44 and the protrusion 54 face each other respectively. Preferably, they are attached to each other with appropriate tolerances in order to allow a rotational movement of the conduit receptacle part 40 with respect to the mounting part 50 but ensure that high separation forces of more than 500N can be withstood.

After assembly, the conduit 20 is fixed to the conduit receptacle part 40 by overmolding, wherein the mounting part 50 is clipped to the conduit receptacle part 40 and is freely rotatable around the conduit receptacle part 40. Thus it is possible to clip a mounting part 50 with a different shape to the conduit receptacle part 40, as long as the mounting part 50 comprises a protrusion 54, a circumferential surface 57 and a stop face 55 that fit to the corresponding parts of the conduit receptacle part 40.

In Fig. 4 another embodiment of the conduit end fitting 30 is shown in a three-dimensional perspective view. Also in this embodiment the conduit 20 is enclosed by the conduit receptacle part 40. More precisely the conduit end 22 is enclosed by the receiving section 41 of the conduit receptacle part 40 by overmolding. Additionally, a sealing cap 60 with an inner cable opening 61 is attached to the conduit receptacle part 40.

The mounting part 150 compared to the previous embodiment comprises a different shape. It comprises besides the front plate 151, the intermediate part 152, the end plate 153 and the receptacle 158 an elastic bracket 170 and a mounting region 172 for attaching additional elements like electrical cables. Although the mounting part 150 has now a different shape compared to the mounting part 50 of the preceding embodiment it is possible to mechanically connect it to the same conduit receptacle part 40 of the previous embodiment. Thus, the same sub-assembly of conduit 20 and conduit receptacle part 40 can be used together with different mounting parts 50, 150 for adaptation to individual mounting conditions.

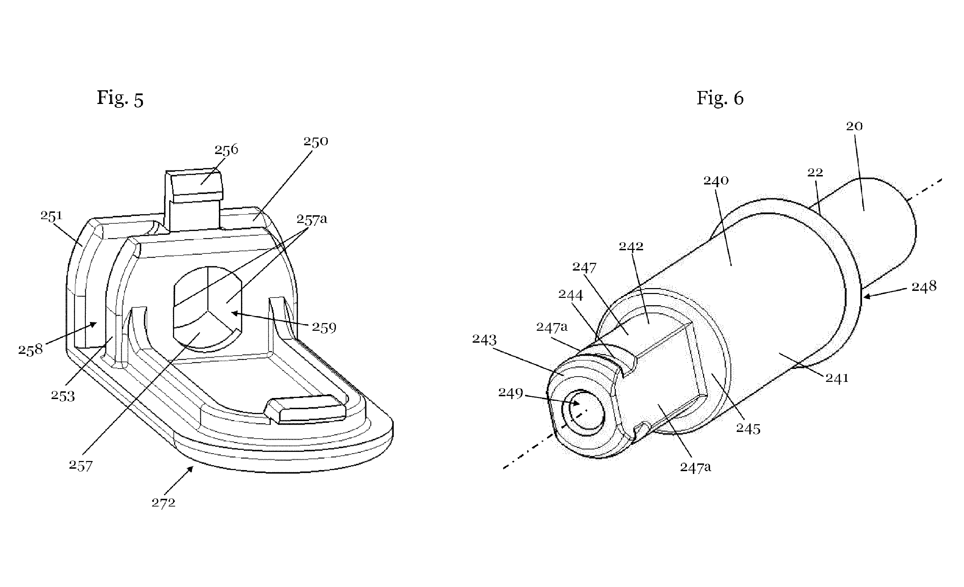

Fig. 5 and 6 show another embodiment of the conduit end fitting 30 in a three-dimensional perspective view. Again, the conduit 20 is enclosed by a conduit receptacle part 240. More precisely the conduit end 22 is enclosed by the receiving section 241 of the conduit receptacle part 240 by overmolding. Like the previous embodiment of the conduit receptacle part 40, also this embodiment comprises a connecting section 242, an end section 243, a notch 244, a stop face 245, a conduit opening 248 and an inner cable opening 249. But, in contrast to the previous embodiments of Figs. 1 - 4, the conduit receptacle part 240 now comprises an outer flat surface 247a in the connection part 242 of the conduit receptacle part 240 in addition to the outer, now only partially circumferential, surface 247. The corresponding counterpart connecting opening 259 of the mounting part 250 comprises two inner flat surface 257a in addition to the inner, now only partially circumferential, surfaces 257. By means of these outer and inner flat surfaces 247a, 257a at the connection between the conduit receptacle part 240 and the mounting part 250, a rotational movement of the conduit receptacle part 240 with respect to the mounting part 250 is prevented. Other non-circular designs of the connection opening 259 and corresponding outer surface 247 may also be used to prevent a rotation between conduit receptacle part 240 and mounting part 250.

The mounting part 250 again comprises a different shape compared to the previous embodiments. Besides the front plate 251, the intermediate part (not visible), the end plate 253, clipping means 256 and the receptacle 258 it comprises a different mounting region 272 for attaching the mounting part or for attaching additional elements thereto.

By the concept of a Bowden cable 1 comprising a conduit end fitting 40, 240 that may have always the same shape and that is overmolded to the conduit 20 to provide a rigid and secure connection, and a mounting part 50, 150, 250 that can provide different shapes according to the actual application and that is manually clipped to the conduit receptacle part 40, 240, a notorious cost reduction, a simplification of the overmolding process as well as an increased flexibility in mounting possibilities of the Bowden cable can be achieved.

Suitable materials for the external coating of the conduit 20 are PVC, PP, PA6, PP+EPDM or PE. Suitable materials for the conduit receptacle part 40, 240, as well as for the mounting part 50, 150, 250 are POM, PA6, PA66, PP or PE, either raw or combined with glass fiber. Glass fiber reinforced plastic materials provide an increased mechanical resistance.

### List of reference signs

- 1: Bowden cable
- 10: inner cable
- 20: conduit
- 22: conduit end
- 30: conduit end fitting
- 40: conduit receptacle part
- 41: receiving section
- 42: connecting section
- 43: end section
- 44: circumferential notch
- 45: stop face
- 46: protrusion
- 47: outer circumferential surface
- 48: conduit opening
- 49: inner cable opening
- 50: mounting part
- 51: front plate
- 52: intermediate part
- 53: end plate
- 54: protrusion
- 55: stop face
- 56: clipping means
- 57: inner circumferential surface
- 58: receptacle
- 59: connecting opening
- 60: sealing cap
- 61: inner cable opening
- 70: cable end fitting
- 80: grommet
- 90: anti-rattle tube protector
- 150: mounting part
- 151: front plate
- 152: intermediate part

- 153: end plate
- 156: clipping means
- 158: receptacle
- 170: elastic bracket
- 172: mounting region
- 240: conduit receptacle part
- 241: receiving section
- 242: connecting section
- 243: end section
- 244: notch
- 245: stop face
- 247: outer circumferential surface
- 247a: outer flat surface
- 248: conduit opening
- 249: inner cable opening
- 250: mounting part
- 251: front plate
- 252: intermediate part
- 253: end plate
- 256: clipping means
- 257: inner circumferential surface
- 257a: inner flat surface
- 258: receptacle
- 259: connecting opening
- 272: mounting region

## Claims

1. Bowden cable (1) comprising:
a) an inner cable (10);
b) a conduit (20);
c) a conduit receptacle part (40, 240) for receiving the conduit (20); and
d) separate from the conduit receptacle part (40, 240) a mounting part (50, 150, 250) for mounting the conduit (20) via the conduit receptacle part (40, 240); wherein
e) the conduit receptacle part (40, 240) is mechanically attached to the mounting part (50, 150, 250).

2. Bowden cable according to claim 1, wherein the conduit receptacle part (40, 240) is overmolded to the conduit (20).

3. Bowden cable according to claim 1 or 2, wherein the mounting part (50, 150, 250) is mechanically attached to the conduit receptacle part (40, 240) by latching.

4. Bowden cable according to one of the claims 1 to 3, wherein the conduit receptacle part (40) is rotatable with respect to the mounting part (50, 150).

5. Bowden cable according to one of the claims 1 to 4, wherein for different applications a conduit receptacle part (40, 240) of the same shape can be mechanically attached to mounting parts (50, 150, 250) of different shapes.

6. Bowden cable according to one of the claims 1 to 5, wherein the conduit receptacle part (40) comprises at least one circumferential notch (44), and the mounting part (50, 150) comprises at least one protrusion (54), wherein the protrusion (54) protrudes into the notch (44), for securing the attachment of the conduit receptacle part (40) with the mounting part (50, 150).

7. Bowden cable according to one of the claims 1 to 6, wherein the mounting part (50, 150, 250) and the conduit receptacle part (40, 240) are designed such that the mounting part (50, 150, 250) can be manually attached to the conduit receptacle part (40, 240) by thrusting the mounting part (50, 150, 250) over the conduit receptacle part (40, 240).

8. Bowden cable according to one of the claims 1 to 7, wherein the conduit receptacle part (40) comprises an outer circumferential surface (47) and/or the mounting part (50, 150) comprises an inner circumferential surface (57), for enabling a rotational movement of the conduit receptacle part (40) with respect to the mounting part (50, 150).

9. Bowden cable according to one of the claims 1 to 8, wherein the mounting part (50, 150, 250) comprises a front plate (51, 151, 251) and an end plate (53, 153, 253) which are spaced from each other and are parallel to each other in order to define a receptacle (58, 158, 258) in-between for mounting to a bracket.

10. Bowden cable according to claim 9, wherein the front plate (51, 151, 251) and/or the end plate (53, 153, 253) comprises elastic clipping means (56, 156, 256) for securing the mounting part (50, 150, 250) at a bracket.

11. Bowden cable according to one of the claims 1 to 10, further comprising a sealing cap (60) that is either a separate part and attached to the conduit receptacle part (40) or a part overmolded to the conduit receptacle part (40).

12. Method for manufacturing a Bowden cable (1), comprising an inner cable (10), and a conduit (20), the method comprising the following steps:
a) inserting one conduit end (22) of the conduit (20) into an injection tool with a mold;
b) overmolding a conduit receptacle part (40, 240) to the conduit end (22) of the conduit (20);
c) providing a mounting part (50, 150, 250) that is separate from the conduit receptacle part (40, 240); and
d) mechanically attaching the mounting part (50, 150, 250) to the conduit receptacle part (40, 240).

13. Method according to claim 12, wherein the step of mechanically attaching the mounting part (50, 150, 250) to the conduit receptacle part (40, 240) is done manually without the need of a tool, preferably by clipping the two parts (40, 240, 50, 150, 250) together.

14. Method according to one of the claims 12 or 13, further comprising the step of overmolding a sealing cap (60) to the conduit receptacle part (40).

15. Method according to claim 14, wherein the overmolding step of the sealing cap (60) is done within a bi-injection tool for producing the sealing cap (60) and the conduit receptacle part (40) in the same tool.
